# EUROPÄISCHE PATENTSCHRIFT

(11) **EP 0 685 322 B1**
(45) Veröffentlichungstag und Bekanntmachung des Hinweises auf die Patenterteilung: **12.08.1998**
(21) Anmeldenummer: 95108070.4
(22) Anmeldetag: 26.05.1995
(51) Int. Cl.: B29D 30/30

(54) **Vorrichtung zum Erfassen der an einer Gürtelaufbautrommel benötigten Länge des zu verarbeitenden Laufstreifens**
Apparatus for the detection of the length of a tread needed to apply said tread to a belt building drum
Dispositif pour la détection de la longueur nécessaire d'une bande de roulement pour l'application de cette bande sur un tambour de ceinture

(30) Priorität: 04.06.1994 DE 4419643
(43) Veröffentlichungstag der Anmeldung: 06.12.1995
(73) Patentinhaber: Continental Aktiengesellschaft, 30165 Hannover (DE)
(72) Erfinder: Käse, Ernst, D-30827 Garbsen (DE)

(56) Entgegenhaltungen:
- DE-A- 2 743 502
- GB-A- 2 139 969
- US-A- 4 729 521

## Beschreibung

Die Erfindung betrifft eine Vorrichtung zur Erfassung der jeweils benötigten Länge eines auf einer Gürtelaufbautrommel zu verarbeitenden Laufstreifens, der abgelängt oder als Endlosmaterial in einer Vorratsvorrichtung einem der Gürtelaufbautrommel Zugeordneten Förderband zugeführt und mit einem Ablängmesser auf Länge geschnitten wird.

Zur Herstellung von Kraftfahrzeug-Luftreifen werden die Laufstreifen auf ziemlich aufwendigen und teuren Anlagen extrudiert. Diese Anlagen sind üblicherweise zur Fertigung endlicher, vorabgelängter Laufstreifen eingerichtet. Die Längen dieser Laufstreifen sind aber nie ganz genau, so daß beim Wickeln des Reifens diese Länge durch den Wickler angepaßt werden müssen. Dies kann zu ganz erheblichen Problemen bezüglich der Rundlaufeigenschaften führen.

Angestrebt wird ein Laufstreifen aus einem endlosen Material, der an der Reifenwickeltrommel aus einem endlosen Material aufgewickelt und nach 360° Aufwickeln an der Stelle geschnitten wird, wo der Anfang des Laufstreifen liegt. Soll ein nur halbwegs vernünftiger Vorrat auf einer Vorratsrolle oder Kassette untergebracht werden, so müssen diese bei der Dicke dieser Laufstreifen einen Durchmesser von ca. 2,5 - 3 m aufweisen.

Durch in fortschreitenden Aufbau des Reifens entstehen zwangsläufig Schwankungen im aktuellen Durchmesser der Gürtelaufbautrommel. Die aktuellen benötigten Längen des Laufstreifenmaterial variieren dadurch und müssen angepaßt und entsprechend abgelängt werden. Da die Laufstreifenlänge nicht dem aktuellen Außendurchmesser des Gürtelpaketes entspricht, muß der Laufstreifen beim Auflegen im Bereich den Spleißes entweder gereckt oder gestaucht werden. Dies führt zu einer ungleichen Materialverteilung des Laufstreifens über dem Umfang.

Die US-A-4 729 521 offenbart hierzu eine Vorrichtung, mit der unvulkanisierte Gummilagen einer Trommel zugeführt werden können, wobei ausgehend von der Messung der äußeren Umfangslänge der Trommel bzw. der bereits mit Material belegten Trommel eine Berechnung der Zustellgrößen und der Länge des unvulkanisierten Gummimateriales für die weiteren Auflagen erfolgt. Der hierzu über ein Meßrad festgestellte äußere Trommelumfang wird mit Hilfe eines Impulszählers in verarbeitbare Drehimpulse umgewandelt, welche über entsprechende Berechnungen mit Hilfe des Durchmessers auf drehimpulsgesteuerte Motoren übertragen werden, die die Fördereinrichtungen antreiben. Die in dem einleitenden Teil des Anspruchs 1 definierten Merkmale sind aus der US-A-4 729 521 bekannt.

Aufgabe der vorliegenden Erfindungen ist es, eine Vorrichtung zu schaffen, mit der die jeweils benötigte Laufstreifenlänge dem aktuellen Trommeldurchmesser entsprechend abgelängt werden kann.

Gelöst wird diese Aufgabe dadurch, daß der Gürtelaufbautrommel eine erste Meßeinrichtung zum Erfassen des aktuellen Trommeldurchmessers zugeordnet ist, dem Förderband zur Zuführung eines auf ihm aufliegenden Laufstreifens eine zweite Meßeinrichtung zugeordnet ist, der Gürtelaufbautrommel ein Ablängmesser zum Ablängen des jeweils aufzulegenden Laufstreifens zugeordnet ist, daß die Meßeinrichtungen auf der Oberfläche der Gürtelaufbautrommel und der Oberfläche des zugeführten Laufstreifenmaterials abrollende Meßräder sind und das Ablängmesser von der zweiten Meßeinrichtung steuerbar ist.

Durch diese Maßnahme wird eine Vorrichtung geschaffen, mit der die Länge des jeweils benötigten Laufstreifens variabel dem jeweiligen Trommeldurchmesser entsprechend angepaßt und abgelängt werden kann.

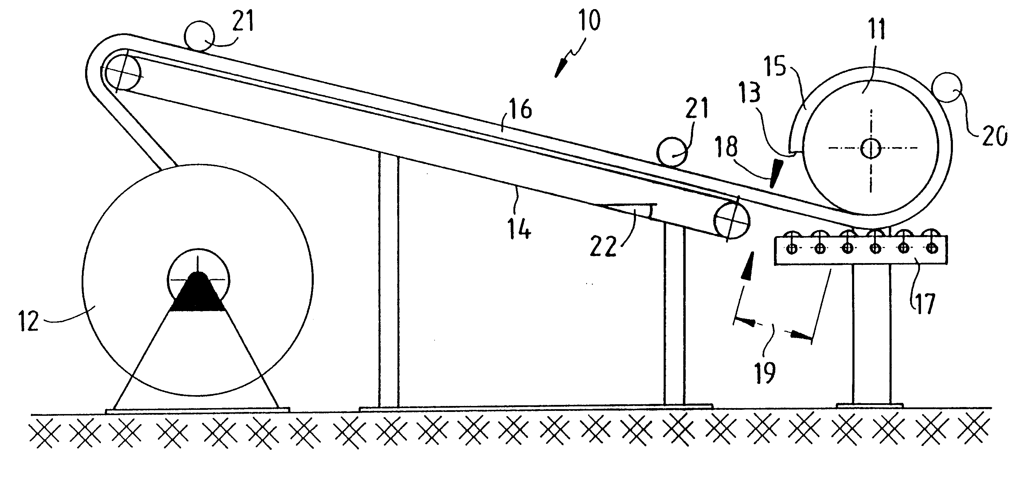

Weitere vorteilhafte Maßnahmen sind in den übrigen Unteransprüchen beschrieben. Die Erfindung ist anhand eines Ausführungsbeispieles in der beiliegenden Zeichnung dargestellt und wird nachfolgend näher beschreiben.

Die in der einzigen Figur schematisch dargestellte Reifenwickel- und Ablängvorrichtung 10, besteht im wesentlichen aus einer Gürtelaufbautrommel 11 und einer Vorratsvorrichtung 12. Zwischen der Vorratsvorrichtung, die beispielsweise eine Vorratsrolle oder Kassette 12 sein kann, und der Gürtelaufbautrommel 11 verläuft ein Förderband 14. Das Förderband 14 läuft unterschlächtig in die Gürtelaufbautrommel 11 ein.

Der Gürtelaufbautrommel 11 ist in einem vorbestimmten Abstand 19 ein Ablängmesser 18 zugeordnet, mit dem der gerade zu verarbeitende, teilweise bereits auf der Gürtelaufbautrommel aufliegende Laufstreifen 15 auf die jeweils benötigte Länge abgelängt wird.

Zur Feststellung der aktuellen benötigten Länge des noch auf dem Förderband 14 aufliegenden, gerade zugeförderten Laufstreifens 16 ist der Gürtelaufbautrommel 11 eine Meßeinrichtung 20, beispielsweise in Form eines Meßrades zugeordnet. Mit dieser Meßeinrichtung 20 wird der tatsächliche Durchmesser der Gürtelaufbautrommel 11, auf der schon Gürtellagen aufliegen können, festgestellt.

Dem Förderband 14 ist eine weitere Meßeinrichtung 21 zugeordnet, mit der das Ablängmesser 18 gesteuert wird, welches den gerade zugeförderten Laufstreifen 16 auf die von der ersten Meßeinrichtung 20 festgestellte benötigte Länge ablängt.

Dem der Gürtelaufbautrommel 11 zugeordneten freien Ende 13 des Förderbandes 14 ist auf der dem Ablängmesser 18 abgewandten Seite eine Allwegrollenanordnung 17 oder ein Tisch zugeordnet, um den abgelängten Laufstreifen 15 sauber auf die Gürtelaufbautrommel 11 auflegen zu können. Das Förderband 14 ist dazu mit einem Neigungswinkel 22 versehen, der ca. 30° beträgt. Das Ablängmesser 18 ist in einem vorbestimmten Abstand 19 von der Gürtelaufbautrommel 11 vorgesehen, wobei dieser Abstand 19 vorzugsweise ca. 10 cm beträgt.

## Patentansprüche

1. Vorrichtung zur Erfassung der jeweils benötigten Länge eines auf einer Gürtelaufbautrommel zu verarbeitenden Laufstreifens, der abgelängt oder als Endlosmaterial in einer Vorratsvorrichtung einem der Gürtelaufbautrommel zugeordneten Förderband zugeführt und mit einem Ablängmesser auf Länge geschnitten wird,
**dadurch gekennzeichnet,**
dass der Gürtelaufbautrommel (11) eine erste Messeinrichtung (20) zum Erfassen des aktuellen Trommeldurchmessers zugeordnet ist, dem Förderband (14) zur Zuführung eines auf ihm aufliegenden Laufstreifens (16) eine zweite Messeinrichtung (21) zugeordnet ist, der Gürtelaufbautrommel (11) ein Ablängmesser (18) zum Ablängen des jeweils aufzulegenden Laufstreifens (15) zugeordnet ist, dass die Messeinrichtungen (20, 21) auf der Oberfläche der Gürtelaufbautrommel und der Oberfläche des zugeführten Laufstreifenmateriales abrollende Messräder sind und das Ablängmesser (18) von der zweiten Messeinrichtung (21) steuerbar ist.

2. Vorrichtung nach Anspruch 1, dadurch gekennzeichnet, dass das Förderband (14) unter einem Neigungswinkel von 20 bis 40°, vorzugsweise 30°, unterschlächtig auf die Gürtelauftrommel (11) zuläuft.

3. Vorrichtung nach Anspruch 1 oder 2, dadurch gekennzeichnet, dass dem Förderband (14) eine dies verlängernde Allwegrollenvorrichtung (17) zugeordnet ist.

4. Vorrichtung nach einem der Ansprüche 1 bis 3, dadurch gekennzeichnet, dass dem Förderband (14) ein dieses verlängernder Tisch zugeordnet ist.

## Claims

1. Apparatus for determining the particular required length of a tread strip, which is to be processed on a belt building drum and is cut to length or is supplied to a conveyor belt, which is associated with the belt building drum, as endless material in a supply device and cut to length with a cutter, characterised in that a first measuring means (20) is associated with the belt building drum (11) for determining the actual drum diameter, a second measuring means (21) is associated with the conveyor belt (14) for supplying a tread strip (16), which lies on said conveyor belt, a cutter (18) is associated with the belt building drum (11) for cutting to length the particular tread strip (15) which is to be deposited, and in that the measuring means (20, 21) are measuring wheels, which roll along the surface of the belt building drum and along the surface of the supplied tread strip material, and the cutter (18) is controllable by the second measuring means (21).

2. Apparatus according to claim 1, characterised in that the conveyor belt (14) travels towards the belt building drum (11) in an undershot manner at an angle of inclination between 20° and 40°, preferably 30°.

3. Apparatus according to claim 1 or 2, characterised in that an omnidirectional rolling device (17), which lengthens the conveyor belt (14), is associated with said conveyor belt.

4. Apparatus according to one of claims 1 to 3, characterised in that a table, which lengths the conveyor belt (14), is associated with said conveyor belt.

## Revendications

1. Dispositif pour la détection de la longueur chaque fois nécessaire d'une bande de roulement qui est à appliquer sur un tambour de construction de la ceinture, qui est coupée à longueur ou qui est amenée, sous forme d'un matériau sans fin dans un dispositif de stockage, à un tapis transporteur associé au tambour de construction de la ceinture et coupée à longueur avec un couteau de coupe à longueur,
caractérisé par le fait
qu'au tambour (11) de construction de la ceinture est associé un premier dispositif de mesure (20) pour détecter le diamètre du tambour à tout moment, qu'au tapis transporteur (14) prévu pour amener une bande de roulement (16) qui y repose, est associé un second dispositif de mesure (21), qu'au tambour (11) de construction de la ceinture est associé un couteau de coupe à longueur (8) pour couper à longueur la bande de roulement (15) à appliquer chaque fois, que les dispositifs de mesure (20, 21) sont des roues de mesure roulant sur la surface du tambour de construction de la ceinture et sur la surface du matériau de bande de roulement amené et que le couteau de coupe à longueur (8) peut être commandé par le second dispositif de mesure (21).

2. Dispositif selon la revendication 1, caractérisé par le fait que le tapis transporteur (14) arrive sur le tambour (11) de construction de la ceinture, tiré par-dessous le tambour, sous un angle d'inclinaison de 20 à 40°, de préférence 30°.

3. Dispositif selon la revendication 1 ou 2, caractérisé par le fait qu'au tapis transporteur (14) est associé un dispositif à rouleaux libres (17) qui le prolonge.

4. Dispositif selon l'une des revendications 1 à 3, caractérisé par le fait qu'au le tapis transporteur (14) est associée une table qui le prolonge.
